Europäisches Patentamt

European Patent Office

Office européen des brevets

(11) Veröffentlichungsnummer: **0 048 791**
**B1**

(12) **EUROPÄISCHE PATENTSCHRIFT**

(45) Veröffentlichungstag der Patentschrift: **07.08.85**

(21) Anmeldenummer: **81103834.8**

(22) Anmeldetag: **19.05.81**

(51) Int. Cl.⁴: **G 01 F 1/66**

(54) **Ultraschalldurchflussmesser.**

(30) Priorität: **25.09.80 CH 7167/80**

(43) Veröffentlichungstag der Anmeldung:
**07.04.82 Patentblatt 82/14**

(45) Bekanntmachung des Hinweises auf die
Patenterteilung:
**07.08.85 Patentblatt 85/32**

(84) Benannte Vertragsstaaten:
**AT CH FR IT LI NL SE**

(56) Entgegenhaltungen:
**DE-B-2 924 561**
**FR-A-2 369 566**
**FR-A-2 408 119**

(73) Patentinhaber: **LGZ LANDIS & GYR ZUG AG**
**CH-6301 Zug (CH)**

(72) Erfinder: **Meisser, Claudio**
**Mythenstrasse 19**
**CH-6410 Goldau (CH)**
Erfinder: **Lechner, Hubert**
**Industriestrasse 6**
**CH-6300 Zug (CH)**

(74) Vertreter: **Müller, Hans-Jürgen, Dipl.-Ing. et al**
**Müller, Schupfner & Gauger Lucile-Grahn-**
**Strasse 38 Postfach 80 13 69**
**D-8000 München 80 (DE)**

Courier Press, Leamington Spa, England.

**Beschreibung**

Die vorliegende Efindung bezieht sich auf einen Messwertgeber zur Bestimmung der Durchflussmenge einer durch ein Rohrsystem strömenden Flüssigkeit durch Messung der Laufzeiten von Ultraschall innerhalb der Flüssigkeit, längs einer von der Flüssigkeit durchflossenen Messstrecke, nach dem Oberbegriff des Patentanspruches 1.

Zur Bestimmung der Durchflussmenge eine Flüssigkeit durch ein Rohrsystem ist es bekannt, Ultraschallimpulse durch eine strömende Flüssigkeit zu senden, um aus der Laufzeit der Impulse auf die mittlere Fliessgeschwindigkeit der Flüssigkeit schliessen zu können. Dabei erwies sich eine Messung der Laufzeiten der Impulse längs eines von der Flüssigkeit durchflossenen Rohrstückes am zweckmässigsten. Bei dieser vom Dokument DE—B—2 924 561 bekannten Anordnung kehren die in dem Aussenraum des Messrohres ausgestrahlten Ultraschallimpulse als Echosignale zurück. Dadurch werden die Nutzsignale gestört, was eine fehlerhafte Messung der Durchflussmenge zur Folge hat. Bei ruhendem Strömungsmittel wird dann ein Durchfluss vorgetäuscht, wenn sich die Echosignale und die Nutzsignale nicht gegenseitig aufheben.

Der vorliegenden Erfindung liegt die Aufgabe zugrunde, einen Messwertgeber der angeführten Art zu schaffen, bei welchem störende Echosignale so unterdrückt sind, dass kein Messfehler entsteht.

Die gestellte Aufgabe ist erfindungsgemäss durch die Merkmale der Patentanspruchs 1 gelöst.

Die einfache, der Unterdrückung der Echosignale dienende Vorrichtung absorbiert, streut und/oder reflektiert die in den Aussenraum des Messrohres ausgestrahlten Ultraschallsignale so, dass der Messwandler während der Empfangsphase keine störenden Echosignale aufnimmt.

Ausführungsbeispiele des erfindungsgemässen Messwertgebers werden anhand einer einzigen Zeichnung näher erläutert.

Es zeigen:

Fig. 1 einen Messwertgeber im Schnitt, und

Figs. 2 und 3 weitere Ausführungen im Teilschnitt.

Die Messstrecke des Messwertgebers besteht aus zwei Anschlussköpfen 1 und 2 mit zwei, grossräumige quaderförmige Hohlkörper bildenden Verteilerkammern 3 und 4 mit aneinander liegenden Trennwänden 5 und 6, welche die beiden Verteilerkammern 3 und 4 fest miteinander verbinden. Ein Messrohr 7 durchdringt die Trennwände 5 und 6 und liegt mit def Enden 8 bzw. 9 so weit im Inneren der Verteilerkammern 3, 4, dass diese die Enden 8 und 9 des Messrohres 7 wenigstens auf einer Länge allseitig umschliessen, die grösser ist als der lichte Durchmesser des Messrohres 7.

Der erste Anschlusskopf 1 weist einen Anschlussnippel 10 für einen durch einen Pfeil bezeichneten Zufluss 11 der Flüssigkeit in die Verteilerkammer 3 und der andere Anschlusskopf 2 eine weiteren Anschlussnippel 12 für einen ebenfalls durch einen Pfeil bezeichneten Abfluss 13 der Flüssigkeit aus der Verteilerkammer 4 auf. Die angeführten Anschlussnippel 10 und 12 liegen vorteilhaft in einer gemeinsamen Achse mit einem Stirnseitenabstand A, welcher einem Normabstand für den Einbau von Wasserzählern in die Wasserleitung entspricht.

Die zu messende Flüssigkeit durchströmt von Zufluss 11 her die erste Verteilerkammer 3, dringt an der einen Stirnseite des Endes 8 in das Messrohr 7 ein, verlässt dieses an seinem anderen Ende 9, durchströmt die zweite Verteilerkammer 4 und gelangt zum Abfluss 13. Die Achse der Messrohres 7 steht senkrecht auf Zentren von Uebertragungsflächen 14 und 15 je eines Messwandlers 16, 17. Die direkt der strömenden Flüssigkeit ausgesetzten Uebertragungsflächen 14, 15 der Messwandler 16, 17 weisen je einen Abstand E von der Stirnseite der Enden 8, 9 des Messrohres 7 auf. Die Abstände E sind so gewählt, dass sich für den Durchfluss der Flüssigkeit einerseits zwei möglichst grosse Durchflussquerschnitte an dern Stirnseiten des Messrohres 7 ergeben, andererseits ist für die Genauigkeit der Messung von Laufzeiten erwünscht, die Abständer E möglichst klein zu halten. Gute Ergebnisse liegen dann vor, wenn die Abstände E annähernd die Hälfte des Innendurchmessers des Messrohres 7 betragen.

Die Stirnflächen der Enden 8 und 9 des Messrohres 7 sind nach aussen angeschrägt oder rund bearbeit.

Der Messwertgeber ist zur Unterdrückung der störenden Echosignale mit einer Vorrichtung 18 versehen, die aus zwei symmetrisch zu den Trennwänden 5, 6 der beiden Verteilerkammern 3, 4 auf dem Messrohr 7 angeordneten Manchetten 19, 20 besteht, die aus Ultraschall absorbierendem Material hergestellt sind. Sie weisen zur Durchflussrichtung der Flüssigkeit im Messrohr 7 rechtwinklig verlaufende Oberflächen 21, 22 auf. Diese Oberflächen 21, 22 können für die betreffenden Ultraschall-Signale auch rauh gestaltet werden und somit eine diffuse Reflexion bewirken.

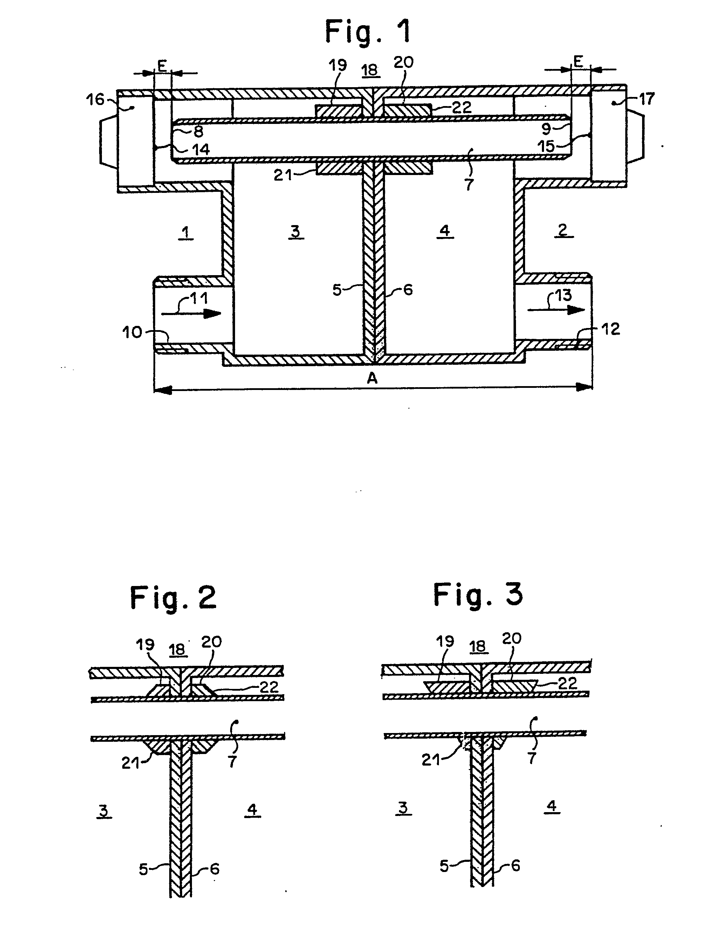

Die Manchetten 19, 20 können aber glatt sein und aus Ultraschall reflektierendem Material bestehen, wobei deren Oberflächen 21, 22, zur Durchflussrichtung der Flüssigkeit im Messrohr 7 so verlaufen müssen, dass die reflektierten Echosignale in den Messwandlern 16 bzw. 17 keine Fehler während der Empfangsphase verursachen. Solche Ausführungen sind aus den Fig. 2 und 3 ersichtlich. Die zur Laufrichtung der Ultraschall-Signale auf den den Messwandlern 16, 17 zugekehrten Seiten der Manchetten 19, 21, schräg verlaufenden Oberflächen 21, 22 weisen gemäss der Fig. 2 eine zur Achse des Messrohres 7 symmetrische und gemäss der Fig. 3 eine zu dieser Achse unsymmetrische Anordnung auf.

Die Vorrichtung 18 zur Unterdrückung der störenden Echosignale kann auch eine andere Form aufweisen; sie muss in jedem Fall die ausserhalb des Messrohres 7 sich ausbreitenden Signale so schwächen, dass kein Messfehler entsteht.

**Patentansprüche**

1. Messwertgeber zur Bestimmung der Durchflussmenge einer durch ein Rohrsystem strömenden Flüssigkeit durch Messung der Laufzeiten von Ultraschall innerhalb der Flüssigkeit längs einer von der Flüssigkeit durchströmten Messstrecke, ausgestattet mit als grossräumige Verteilerkammern (3, 4) ausgebildeten und mit einem Messrohr (7) versehenen Anschlussköpfen (1, 2) für einen Zu- und Abfluss der Flüssigkeit und mit gegenüber den beiden Enden (8, 9) des Messrohres in den Anschlussköpfen angeordneten, mit der Flüssigkeit in unmittelbarer Berührung stehenden Messwandlern (16, 17), wobei die Achse der Messrohres senkrecht auf Zentren ihrer aktiven Uebertragungsflächen (14, 15) steht, dadurch gekennzeichnet, dass eine Ultraschall-Signale underdrückende Vorrichtung (18) vorgesehen ist, welche die von den aktien Uebertragungsflächen (14, 15) der Messwandler (16 bzw. 17) ausserhalb des Messrohres (7) ausgesandten Ultraschallsignale so unterdrückt, dass in der Empfangsphase keine störenden Echosignale von den Messwandlern (16, bzw. 17) aufgenommen werden.

2. Messwertgeber nach Anspruch 1, dadurch gekennzeichnet, dass die Vorrichtung (18) zur Unterdrückung von störenden Echosignalen in der Gegend, in welcher das Messrohr (7) eine gemeinsame Trennwand (5, 6) der Verteilerkammern (3, 4) durchdringt, symmetrisch zu dieser Trennwand (5, 6) am Messrohr (7) angeordnet ist.

3. Messwertgeber nach Anspruch 1 und 2, dadurch gekennzeichnet, dass die Vorrichtung (18) aus Ultraschall-Signale reflektierenden Manchetten (19, 20) besteht, deren den aktiven Uebertragungsflächen (14, 15) der Messwandler (16, 17) zugekehrte Flächen (21, 22) schräg zur Laufrichtung der Ultraschall-Signale verlaufen und die Ultraschall-Signale so reflektieren, dass keine störenden Echosignale von den Messwandlern (16 bzw. 17) aufgenommen werden.

4. Messwertgeber nach Anspruch 1 und 2, dadurch gekennzeichnet, dass die Vorrichtung (18) aus Ultraschall absorbierendem Material besteht.

5. Messwertgeber nach Anspruch 3, dadurch gekennzeichnet, dass die den aktiven Uebertragungsflächen (14, 15) der Messwandler (16, 17) zugekehrten Flächen (21, 22) eine Ultraschall streuende Oberfläche aufweisen.

6. Messwertgeber nach einem der vorstehenden Ansprüche, dadurch gekennzeichnet, dass die Stirnflächen des Messrohres (7) nach aussen angeschrägt oder rund bearbeitet sind.

**Revendications**

1. Capteur pour la détermination du débit d'un liquide circulant dans un réseau de conduites, par mesure des temps de propagation d'ultrasons dans le liquide, le long d'une section de mesure par-courue par ce dernier, avec des têtes de raccordement (1, 2) des affluents et effluents du liquide, réalisées sous forme de grandes chambres de répartition (3, 4), et munies d'un tube de mesure (7), et avec des transducteurs (16, 17) disposés dans les têtes de raccordement, en regard des deux extrémités (8, 9) du tube de mesure et en contact direct avec le liquide, l'axe du tube de mesure étant perpendiculaire au centre de la face de transfert active des transducteurs (14, 15), ledit capteur étant caractérisé par un dispositif (18) de suppression des signaux ultrasonores, qui réduit les signaux ultrasonores émis par les faces de transfert actives (14, 15) des transducteurs (16, 17) à l'extérieur du tube de mesure (7), de façon qu'aucun signal d'écho gênant n'est reçu par les transducteurs (16, 17) pendant la phase de réception.

2. Capteur selon revendication 1 caractérisé en ce que le dispositif (18) de suppression des signaux d'écho gênants est situé sur le tube de mesure (7), dans la région où ce dernier traverse une cloison (5, 6) commune des chambres de répartition (3, 4), symétriquement par rapport à ladite cloison (5, 6).

3. Capteur selon revendications 1 et 2, caractérisé en ce que le dispositif (18) est constitué par des manchettes (19, 20) réfléchissant les signaux ultrasonores et dont les faces (21, 22) en regard des faces de transfert actives (14, 15) des transducteurs (16, 17) sont inclinées par rapport au sens de propagation des signaux ultrasonores et réfléchissent ces derniers de façon que les transducteurs (16, 17) ne reçoivent aucun signal d'écho gênant.

4. Capteur selon revendications 1 et 2, caractérisé en ce que le dispositif (18) est constitué par un matériau absorbant les ultrasons.

5. Capteur selon revendication 3, caractérisé en ce que les faces (21, 22) situées en regard des faces de transfert actives (14, 15) des transducteurs (16, 17) présentent une surface diffusant les ultrasons.

6. Capteur selon une quelconque des revendications 1 à 5, caractérisé en ce que les faces frontales du tube de mesure (7) sont chanfreinées ou arrondies vers l'extérieur.

**Claims**

1. A measured value generator for determining the quantitative flow rate of a fluid flowing through a pipe system by measuring the transit times of ultrasound within the fluid along a measuring section through which the fluid flows, provided with connecting heads (1, 2) for the feed and discharge of the fluid, which are in the form of large-volume distributor chambers (3, 4) and which are provided with a measuring pipe (7), and further comprising measuring transducers (16, 17) which are disposed in opposite relationship to the two ends (8, 9) of the measuring pipe in the connecting heads and which are in direct contact with the fluid, wherein the axis of the measuring pipe is normal to centres of their active transmission surfaces (14, 15), characterised in that there is provided a means (18) for suppressing ultrasonic signals, which so suppresses the ultrasonic signals which are emitted by the active transmission surfaces (14, 15) of the measuring transducers (16 and 17 respectively) outside of the measuring pipe (7), that no interference echo signals are received by the measuring transducers (16 or 17) in the receiving phase.

2. A measured value generator according to claim 1 characterised in that the means (18) for suppressing interference echo signals is disposed in the region in which the measuring pipe (7) passes through a common partitioning wall (5, 6) of the distributor chambers (3, 4), on the measuring pipe (7) and symmetrically with respect to said partitioning wall (5, 6).

3. A measured value generator according to claim 1 and claim 2 characterised in that the means (18) comprises ultrasonic signal-reflecting sleeves (19, 20) whose surfaces (21, 22) which are towards the active transmission surfaces (14, 15) of the measuring transducers (16, 17), extend inclinedly with respect to the direction of travel of the ultrasonic signals and reflect the ultrasonic signals in such a way that no interference echo signals are received by the measuring transducers (16 and 17) respectively).

4. A measured value generator according to claim 1 and claim 2 characterised in that the means (18) comprises ultrasound-absorbent material.

5. A measured value generator according to claim 3 characterised in that the surfaces (21, 22) which are towards the active transmission surfaces (14, 15) of the measuring transducers (16, 17) have an ultrasound-scattering surface.

6. A measured value generator according to one of the preceding claims characterised in that the end faces of the measuring pipe (7) have an outside bevel or are machined round.

# Fig. 1

# Fig. 2

# Fig. 3